# EUROPÄISCHE PATENTSCHRIFT

(11) **EP 0 995 098 B1**
(45) Veröffentlichungstag und Bekanntmachung des Hinweises auf die Patenterteilung: **03.04.2002**
(21) Anmeldenummer: 98937472.3
(22) Anmeldetag: 10.06.1998
(51) Int. Cl.: G01N 1/34, G01N 35/10

(54) **VERFAHREN UND VORRICHTUNG ZUR SERIENPROBENAHME**
METHOD AND DEVICE FOR TAKING SERIES OF SAMPLES
PROCEDE ET DISPOSITIF POUR PRELEVER EN SERIE DES ECHANTILLONS

(30) Priorität: 10.07.1997 DE 19729492
(43) Veröffentlichungstag der Anmeldung: 26.04.2000
(73) Patentinhaber: FORSCHUNGSZENTRUM JÜLICH GMBH, 52425 Jülich (DE)
(72) Erfinder: WANDREY, Christian, D-52428 Jülich (DE); WEUSTER-BOTZ, Dirk, D-52070 Aachen (DE); ALTENBACH-REHM, Jutta, D-68163 Mannheim (DE); DRESCHER, Thomas, D-52428 Jülich (DE)
(74) Vertreter: Rox, Thomas Dr.
(86) Internationale Anmeldenummer: EP9803523
(87) Internationale Veröffentlichungsnummer: WO9902961

(56) Entgegenhaltungen:
- EP-A- 0 244 751
- WO-A-93/16790
- WO-A-96/03633
- DE-A- 4 407 439
- DE-A- 4 411 266
- DE-U- 9 421 730

## Beschreibung

Die vorliegende Erfindung betrifft ein Verfahren und eine Vorrichtung zur Serienprobenahme für die online-Bestimmung von Substrat- und Produktkonzentrationen in Flüssigkeiten.
Das zuvor genannte Verfahren gewinnt in der Umwelttechnik, der chemischen Verfahrenstechnik und in der Bioverfahrenstechnik eine immer größere Bedeutung, um technische Prozesse besser überwachen, steuern und regeln zu können. Hierbei werden im Stand der Technik entweder Sensoranordnungen direkt in die zu überwachenden Anlagen eingebaut oder es werden automatisch aus der Anlage Proben entnommen, aufbereitet und einem separaten Analysengerät zugeführt.
Als Sensoren werden überwiegend potentiometrische, amperometrische und konduktometrische Elektroden eingesetzt. Eine Selektivität von Elektroden in Bezug auf verschiedene Ionen läßt sich durch die Wahl geeigneter Membranen als Interface zwischen Elektrodenanordnung und Meßlösung erreichen. Um auch nichtionische Komponenten detektieren zu können, müssen "chemische" oder "biologische" Erkennungssysteme der eigentlichen Elektrodenanordnung vorgeschaltet werden. Beispiele sind sogenannte Enzymelektroden, bei denen Oxidasen auf der Elektrodenanordnung immobilisiert werden. Die Substratkonzentration (z.B. Glucose) in der Meßlösung ist dabei proportional der gebildeten Menge an Sauerstoff, der amperometrisch gemessen werden kann. Als Meßwandler werden darüber hinaus auch Feldeffekttransistoren (FET) und Optroden angewendet.

Bei allen bisher entwickelten Chemo- und Biosensoranordnungen steht neben der oftmals begrenzten Stabilität und nicht unerheblicher Querempfindlichkeiten in einer komplexen Matrix die fehlende Robustheit einem Einsatz als direkte Meßsonde im Wege (z.B. Sterilisation).

Zur online-Analyse von kleinen Reaktionsvolumina sind bisher spektroskopische Methoden (UV, VIS, NIR und/oder IR) sowie Fluorometrie verfügbar. Als Standard sind sogenannte Mikrotiterplatten-Photometer etabliert, die mit hoher Geschwindigkeit die Kavitäten von Mikrotiterplatten abscannen. Bisher wurde diese Technik für die parallele Trübungsmessung als Maß für die Biomassekonzentration bei der Kultivierung von Mikroorganismen und Zellen in Mikrotiterplatten eingesetzt.

Zur direkten Substrat- oder Produktanalyse bei Fermentationen sind spektroskopische Methoden jedoch aufgrund der komplexen Matrix mit sich stark überlagernden Spektren nur in den seltensten Fällen geeignet. Online-Probenahmesysteme für kleine Reaktionsvolumina (insbesondere kleiner als 100 ml) sind bisher nicht beschrieben worden.

Einer automatischen Probenahme und -aufarbeitung kommt somit eine große Bedeutung bei der Anwendung von online-Analysentechniken zu, so daß auch nahezu jede beliebige im Labor übliche, für den spezifischen Substrat- bzw. Produktnachweis optimierte Analysentechnik direkt am Prozeß eingesetzt werden kann.

Weiterhin setzt die online-Bestimmung von Substrat- und Produktkonzentrationen über Probenahmesysteme voraus, daß jede Reaktion bei der Probenaufbereitung unterbunden wird. In der Bioverfahrenstechnik bedeutet dies die Abtrennung des Biokatalysators als primären Probenahmeschritt. Hierzu werden überwiegend Membranverfahren wie Mikro- oder Ultrafiltration eingesetzt, wobei zwischen Membransonden und einer Filtration in einem Bypass unterschieden wird. Das gewonnene Filtrat wird nachfolgend direkt oder nach Verdünnung dem Analysator zugeführt.

Alternativ dazu ist aus dem Stand der Technik das sogenannte Tubingverfahren zur Probenahme bekannt, bei dem ein Dialyseoder Gasdiffusionsschlauch in das Reaktionsmedium getaucht wird und die zu analysierenden Substanzen von einem kontinuierlichen Akzeptorstrom aufgenommen und zum Analysator transportiert werden. Als Akzeptormedien werden nicht nur Gase wie bei der Alkoholbestimmung eingesetzt, sondern auch Flüssigkeiten. Die Empfindlichkeit und die Ansprechzeit des Tubingverfahrens hängen neben der Temperatur von der Membranfläche, der Membrandicke, dem Diffusionskoeffizienten, dem Verteilungskoeffizienten und den Strömungsgeschwindigkeiten von Reaktionsmedium und Akzeptormedium ab.

Das Tubingverfahren mit Dialysemembran wurde zur Bestimmung von Ammonium, Phosphat und Zucker mit einem Autoanalyzer und enzymatischen Sensoren eingesetzt. Für die klinische Analytik wurde eine Mikrodialysesonde entwickelt und mit Hilfe einer insitu sterilisierbaren Dialyse-Tauchsonde mit erzwungener Tangentialströmung und nachgeschalteter Enzymthermistoranordnung konnte im Bereich von 1 - 110 mM Glucose online gemessen werden.

U. Spohn, H. Voss, "Probenahmesysteme für die Online-Probeanalytik in der Sterilfermentation" in P. Präve, M. Schlingmann, K. Esser, R. Thauer, F. Wagner (eds), Jahrbuch Biotechnologie, Carl Hauser Verlag München Wien, 1992, S. 227-253 offenbart eine Tubinganordnung zur Abtrennung flüchtiger bzw. niedermolukularer Substanzen, bei dem Schlauchschleifen aus einem geeigneten Membranmaterial über Anschlußstutzen im Deckel oder in der Reaktorwand durch das Fermentationsmedium geführt werden. Als Akzeptormedium werden unter anderem wäßriger Trägermedien verwendet, die durch die Tubinganordnung mit Hilfe einer Pumpe transportiert werden. Weiterhin sind mehrere Dialysetauchsonden, die als besondere Ausgestaltung einer invasiven Dialysesonde dargestellt werden, über Mehrwegeventile parallel geschaltet und können nacheinander angewählt werden.

Zur Kalibrierung einer nach dem Tubingverfahren arbeitenden Vorrichtung wird vorgeschlagen, Kalibrierlösungen über ein separates Injektionsventil dem Detektor zuzuführen. Somit ist eine Kalibrierung des Detektors möglich, jedoch ergibt sich der Nachteil, daß nicht die gesamte Vorrichtung durch diese Art der Kalibrierung geeicht wird. Denn der sehr auf Umgebungsbedingungen ansprechende Dialysevorgang wird nicht in die Kalibrierung mit einbezogen. Es wird lediglich der Detektor geeicht, wobei keine Kalibrierung der eigentlichen Probenahme durchgeführt wird, also der Durchtritt der zu messenden Substanz aus dem Fermentationsmedium in das Akzeptormedium hinein. Die Folge ist also eine unzureichende Kalibrierung der Vorrichtung des Verfahrens zur Serienprobenahme.

Die DE 94 21 730 U1 offenbart eine Vorrichtung zum Analysieren eines Fluidmediums, das insbesondere in situ durchgeführt wird. Für eine Kalibrierung wird vorgeschlagen, daß eine spezifische Referenzflüssigkeit dem Detektor mit Hilfe einer Pumpe zugeführt wird, während der Fluß der Probenflüssigkeit von der Probenentnahmezelle gestoppt wird.

Weiterhin offenbart die DE 94 21 730 U1, daß vor dem Betrieb der Meßvorrichtung die Membran kalibriert werden kann, indem die Membran mit einer Standardlösung in Berührung gebracht wird. Somit wird zwar das aus Membran und Detektor bestehende System kalibriert, jedoch kann das beschriebene Kalibrierungsverfahren nur vor oder nach einer Messung durchgeführt werden, so daß in nachteiliger Weise Veränderungen der Nachweischarakteristik während der Messung unberücksichtigt bleiben.

Die DE 44 07 439 A1 offenbart ein Verfahren und eine Vorrichtung zur Serienprobenahme biologischer Proben, wobei vorgeschlagen wird, dem Reaktionsgemisch im Reaktor einen internen Standard in definierter Konzentration beizugeben. Dieser interne Standard muß der Bedingung genügen, daß durch die Reaktion im Reaktor seine Konzentration nicht verändert wird. Weiterhin darf der interne Standard die Reaktion im Reaktor nicht beeinflussen. Dadurch ist zwar eine Kalibrierung der Meßsonde während des Meßverfahrens möglich, jedoch bezieht sich diese Kalibrierung nicht auf die Kalibrierung des Meßsystems auf die zu untersuchenden Stoffe.

Die EP 0 244 751 A2 offenbart schließlich ein automatisiertes Analysesystem für mehrere Strömungswege, bei dem die Kalibrierung mit Hilfe eines internen Referenzstandards durchgeführt wird. Dabei enthält die interne Referenzstandardlösung eine vorbestimmte Konzentration eines Elementes, das nicht in einem der Prozeßströmungswege vorhanden ist. Auch hier gilt also, daß in nachteiliger Weise die Vorrichtung und auch das Verfahren nicht auf die eigentlichen zu analysierenden Stoffe kalibriert wird.

Der vorliegenden Erfindung liegt daher das technische Problem zugrunde, ein Verfahren und eine Vorrichtung zur parallelen Serienprobenahme zu schaffen, das wiederholte Probenahmen gleichzeitig oder nacheinander an einer Mehrzahl von Probenahmestellen auch bei kleinen Volumina ermöglicht, wobei gleichzeitig eine Kalibrierung der gesamten Meßvorrichtung durchführbar ist.

Das zuvor beschriebene technische Problem wird durch das im Anspruch 1 angegebene Verfahren sowie durch die in Anspruch 9 angegebene Vorrichtung gelöst.

Bei dem erfindungsgemäßen Verfahren sind mindestens zwei Dialyseschläuche für Probenahmen in Gefäßen, insbesondere Reaktionsgefäßen, angeordnet, wobei die Dialyseschläuche untereinander mit Verbindungsschläuchen verbunden sind. Die Dialyseschläuche sowie die Verbindungsschläuche sind mit einem, vorzugsweise flüssigen, Akzeptormedium gefüllt. Während einer ersten Zeitdauer befindet sich das Akzeptormedium im wesentlichen in Ruhe, so daß das innerhalb jedes Dialyseschlauches angeordnete Akzeptormedium durch die Wand des Dialyseschlauches diffusiv ein bzw. mehrere Analyte aufnimmt. Während einer zweiten Zeitdauer wird das Akzeptormedium mit Hilfe einer Pumpe zu einem Detektor zur Messung der Konzentration des bzw. der Analyte transportiert. Gleichzeitig wird neues unverbrauchtes Akzeptormedium in die Dialyseschläuche und Verbindungsschläuche nachgefüllt. Nach der Messung der in das Akzeptormedium aufgenommenen Proben wird die Pumpe zur diffusiven Aufnahme neuer Proben für eine festgelegte Zeitdauer gestoppt, so daß der zuvor beschriebene zweiteilige Ablauf wiederholt wird.

In Abhängigkeit von der Entfernung des Dialyseschlauches vom Detektor tritt eine unterschiedlich starke Dispersion des Analyten innerhalb des Akzeptormediums und somit eine Rückvermischung der Proben im Akzeptormedium auf. Dadurch ergeben sich positionsabhängig unterschiedliche Formen der Meßsignale. Daher ist es zweckmäßig, ein oder mehrere Gefäße, in denen Dialyseschläuche für Probenahmen angeordnet sind, mit einer Standardlösung zu füllen, die bekannte Mengen der Analyte als interne Standards enthalten, und die Meßwerte dieser internen Standards zur Kalibrierung der Meßwerte zu benutzen.

In einer ersten bevorzugten Ausgestaltung sind die Dialyseschläuche mit Hilfe der Verbindungsschläuche in Serie miteinander verbunden, so daß das Akzeptormedium während der zweiten Zeitdauer durch die in Serie hintereinander angeordneten Dialyseschläuche strömt. Somit werden die Abschnitte des Akzeptormediums, die die in den Dialyseschläuchen gewonnenen Proben enthalten, nacheinander zum Detektor transportiert. In vorteilhafter Weise wird daher mit einem einfachen Aufbau eine serielle Erfassung der Konzentrationen von Analyten in einer Mehrzahl von Gefäßen mit nur einem Detektor erreicht.

Vorzugsweise ist weiterhin ein Gaseinlaßventil vorgesehen, mit dem in geeigneten Abständen Gasblasen in das Akzeptormedium eingelassen werden können, so daß sich bei Stillstand des Akzeptormediums jeweils 1 Gasblase in jedem Verbindungsschlauch zwischen den Dialyseschläuchen befindet und so daß die verschiedenen Dialyseschläuchen zugeordneten Abschnitte des Akzeptormediums voneinander im wesentlichen getrennt sind. Dadurch wird ein Stofftransport in Form von Diffusion oder Dispersion zwischen den verschiedenen Abschnitten des Akzeptormediums verhindert und eine Rückvermischung zwischen den Proben im Akzeptormedium unterbunden.

In einer zweiten Ausgestaltung sind die Dialyseschläuche parallel angeordnet und über die Verbindungsschläuche miteinander verbunden, wobei zumindest eine, vorzugsweise zwei Mehrwegeventilanordnungen vor bzw. hinter der parallelen Anordnung der Dialyseschläuche angeordnet sind. Diese Anordnung hat den Vorteil, daß der Abschnitt des Akzeptormediums jedes einzelnen Dialyseschlauches individuell behandelt werden kann. Somit können unabhängig voneinander an verschiedenen Meßstellen in unterschiedlicher Reihenfolge und in unterschiedlicher Häufigkeit Proben für eine Analyse der Konzentration eines oder mehrerer Analyten bestimmt werden.

Wie zuvor beschrieben worden ist, sind die Dialyseschläuche in verschiedenen Gefäßen angeordnet. Weiterhin ist es auch möglich, die Dialyseschläuche innerhalb eines gemeinsamen Gefäßes anzuordnen, so daß in vorteilhafter Weise an verschiedenen Stellen innerhalb eines Gefäßes die Konzentration eines Analyten oder mehrerer Analyte gemessen werden kann.

Weiterhin ist es von Vorteil, wenn ein Dialyseschlauch durch ein Bündel von Dialysekapillaren ersetzt wird, wobei die Dialysekapillaren an den Verbindungsstellen zu den Verbindungsschläuchen in diese eingegossen sind. Dadurch wird bei einer Miniaturisierung eine vergrößerte Dialysefläche bei gleicher Menge an Akzeptormedium erzeugt. Die Effektivität des Verfahrens bzw. der Vorrichtung wird somit gesteigert.

Weiterhin können in vorteilhafter Weise statt eines einzelnen Detektors mehrere Detektoren für einen Nachweis unterschiedlicher Analyte hintereinander angeordnet werden, um gleichzeitig mehrere Konzentrationen von Analyten erfassen zu können.

Um die Rückwirkungsfreiheit der diffusiven Probenahme sicherzustellen, ist es zweckmäßig, daß das Akzeptormedium bis auf den bzw. die Analyten alle niedermolekularen Komponenten des zu analysierenden Reaktionsmediums mit Massen unterhalb der Ausschlußgrenze in ähnlichen Konzentrationen enthält. Damit wird sichergestellt, daß im wesentlichen nur das spezifische bzw. die spezifischen Analyte in das Akzeptormedium diffundieren können.

Mit Hilfe des zuvor beschriebenen Verfahrens und der zuvor beschriebenen Vorrichtung, können Proben rückwirkungsfrei aus einer Mehrzahl von Gefäßen parallel entnommen, einem oder mehreren Detektoren zugeführt und die Substratkonzentrationen aufgrund der besonderen Art der Kalibrierung genau und zuverlässig gemessen werden. Mit Hilfe einer präzisen Dosiertechnik für Kleinvolumina kann darüber hinaus über geeignete parallele Regelalgorithmen eine für jedes Gefäß individuelle Substratdosierung erfolgen, so daß vorgegebene Substratsollwerte oder Sollwertprofile eingeregelt werden können. Die Ablaufsteuerung, online-Messung und Substratregelung sowie die abschließende Datenauswertung werden dabei von einem Computer übernommen.

Ein bevorzugtes Anwendungsgebiet der vorliegenden Erfindung ist die Substratregelung in Schüttelkolben, die in der biotechnologischen Forschung und Entwicklung zum Einsatz kommt. Mit der vorliegenden Erfindung werden kürzere Prozeßentwicklungszeiten möglich, da viele Experimente im Parallelansatz durchgeführt und gesteuert werden können.

Im folgenden werden verschiedene Ausführungsbeispiele der vorliegenden Erfindung anhand der Zeichnung näher erläutert. In der Zeichnung zeigt
- Fig. 1: eine schematische Darstellung einer erfindungsgemäßen Vorrichtung zur Serienprobenahme zusammen mit einem Computer- und einer Nachfülleinheit,
- Fig. 2: ein erstes Ausführungsbeispiel einer erfindungsgemäßen Vorrichtung zur Serienprobenahme, bei der die Dialyseschläuche in Serie angeordnet sind,
- Fig. 3: ein zweites Ausführungsbeispiel einer erfindungsgemäßen Vorrichtung zur Serienprobenahme, bei der die Dialyseschläuche parallel angeordnet sind, und
- Fig. 4: eine grafische Darstellung von Meßsignalen.

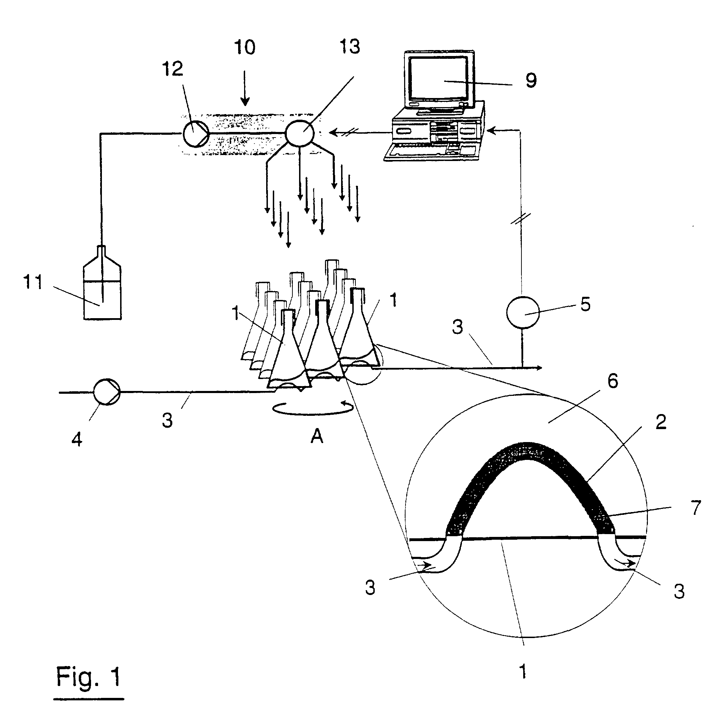

Fig. 1 zeigt eine erfindungsgemäße Vorrichtung zur Serienprobenahme, insbesondere zur Bestimmung der Substrat- und Produktkonzentrationen in Flüssigkeiten, die eine Mehrzahl von Gefäßen 1 aufweist, in denen jeweils zu analysierende Flüssigkeiten enthalten sind. Im dargestellten Beispiel handelt es sich bei den Gefäßen 1 um Schüttelkolben, die - wie mit dem Pfeil A dargestellt ist - ständig in Bewegung gehalten werden. Mit gestrichelten Linien ist in Fig. 1 mit einer Mehrzahl von Gefäßen angedeutet, daß die erfindungsgemäße Vorrichtung gerade für eine Probenahme aus einer Mehrzahl von Gefäßen geeignet ist. Durch die Analyse, die im folgenden beschrieben wird, sollen entweder die Konzentration von Substraten oder von Reaktionsprodukten innerhalb der Flüssigkeit gemessen werden.

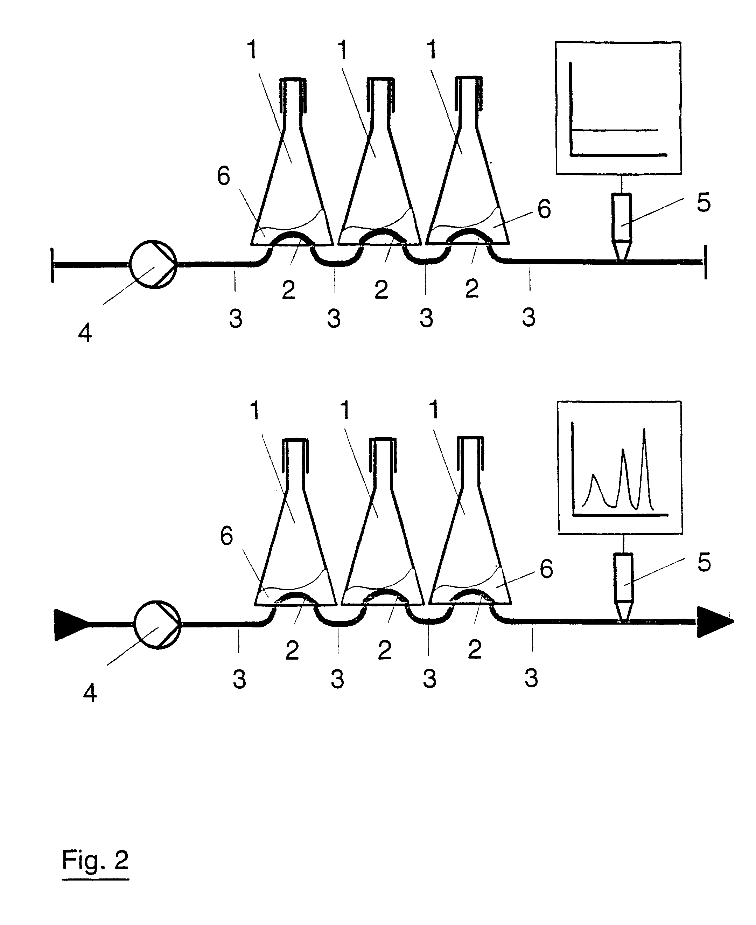

Dazu befindet sich, wie in Fig. 2 dargestellt ist, innerhalb jedes der dargestellten Gefäße ein Dialyseschlauch 2, wobei die verschiedenen Dialyseschläuche 2 über Verbindungsschläuche 3 in Serie miteinander verbunden sind. Diese serielle Anordnung aus Dialyseschläuchen 2 und Verbindungsschläuchen 3 ist mit weiteren Verbindungsschläuchen 3 einerseits mit einer Pumpe 4 und andererseits mit einem Detektor 5 verbunden.

Für eine Analyse einer Flüssigkeit 6, die sich innerhalb des Gefäßes 1 befindet, ist es weiterhin zur Sicherstellung reproduzierbarer Analysebedingungen vorteilhaft, wenn der Dialyseschlauch 2 vollständig von der Flüssigkeit 6 bedeckt wird. Daher ist der Dialyseschlauch 2 am Boden des Gefäßes 1 angeordnet, wie in der Ausschnittsvergrößerung in Fig. 1 zu erkennen ist. Bei der Anordnung am Boden des Gefäßes 1 wird somit auch bei einer Anwendung mit Schüttelkolben eine dauerhafte Bedeckung mit der zu analysierenden Flüssigkeit 6 gewährleistet. Bei anderen Anwendungen kann es dagegen auch vorteilhaft sein, wenn der Dialyseschlauch 2 nicht am Boden, sondern an einer Seitenwand des Gefäßes 1 oder frei innerhalb der Flüssigkeit 6 angeordnet ist.

In Fig. 2 ist der Detektor 5 nur schematisch wiedergegeben, da in Abhängigkeit der zu analysierenden Analyte ein jeweils geeigneter Detektortyp verwendet wird. Diese Detektortypen sind aus dem Stand der Technik bekannt und in der Beschreibungseinleitung ausführlich dargestellt worden. Um Wiederholungen zu vermeiden, wird darauf Bezug genommen.

Die in der Fig. 2 dargestellte Vorrichtung zur Serienprobenahme wird nun in der folgenden Weise verwendet. Zunächst wird mit Hilfe der Pumpe 4 ein geeignetes Akzeptormedium 7 in die Dialyseschläuche 2 und die Verbindungsschläuche 3 gepumpt. Von dieser Einstellung ausgehend ist während einer ersten Zeitdauer die Pumpe 4 ausgeschaltet und ein Analyt, das in der im Gefäß 1 angeordneten Flüssigkeit 6 enthalten ist, wird vom im Dialyseschlauch 2 angeordneten Akzeptormedium 7 aufgenommen. Der dabei zugrundeliegende Mechanismus ist die Diffusion des Analyten durch die Wand des Dialyseschlauches 2 hindurch. Somit sammelt sich eine für die Konzentration des Analyten in der Flüssigkeit 6 charakteristische Analytmenge im Akzeptormedium 7 innerhalb einer vorgegebenen Zeitdauer an. Dabei wird im Gegensatz zur Filtration in vorteilhafter Weise erreicht, daß das Volumen der in dem Gefäß 1 enthaltenen Flüssigkeit 6 im wesentlichen unverändert bleibt.

Während einer zweiten Zeitdauer wird das in den Dialyseschläuchen 2 und in den Verbindungsschläuchen 3 enthaltene Akzeptormedium 7 mit Hilfe der Pumpe 4 zum Detektor 5 transportiert und gleichzeitig unverbrauchtes, neues Akzeptormedium 7 in die Dialyseschläuche 2 sowie in die Verbindungsschläuche 3 nachgefüllt. Bei dem in Fig. 2 dargestellten Ausführungsbeispiel wird wegen des seriellen Aufbaus der wesentliche Teil des Akzeptormediums 7 und insbesondere die während der ersten Zeitdauer innerhalb der Dialyseschläuche 2 angeordneten Abschnitte des Akzeptormediums 7 nacheinander zum Detektor 5 transportiert. Dort werden dann nacheinander die Meßsignale registriert, die den jeweiligen Konzentrationen des Analyten in den zugeordneten Gefäßen 1 entsprechen.

Der Ablauf des Verfahrens ist in der Fig. 2 zu erkennen. In der oberen Hälfte von Fig. 2 ist die erfindungsgemäße Vorrichtung während der ersten Zeitdauer, in der die Pumpe 4 ausgeschaltet ist, dargestellt. Das schematisch oberhalb des Detektors 5 dargestellte Diagramm der Meßsignale zeigt eine Nullinie. In der unteren Hälfte von Fig. 2 ist der Zustand der erfindungsgemäßen Vorrichtung während der zweiten Zeitdauer dargestellt, in der die Pumpe 4 das Akzeptormedium 7 zum Detektor 5 transportiert. Die sich zuvor in den Dialyseschläuchen 2 befindenden Abschnitte des Akzeptormediums 7 werden dann nacheinander durch den vom Detektor 5 erfaßten räumlichen Bereich hindurchgeschoben. Es entstehen die oberhalb des Detektors 5 in der Abbildung 2, unten, dargestellten Meßsignale.

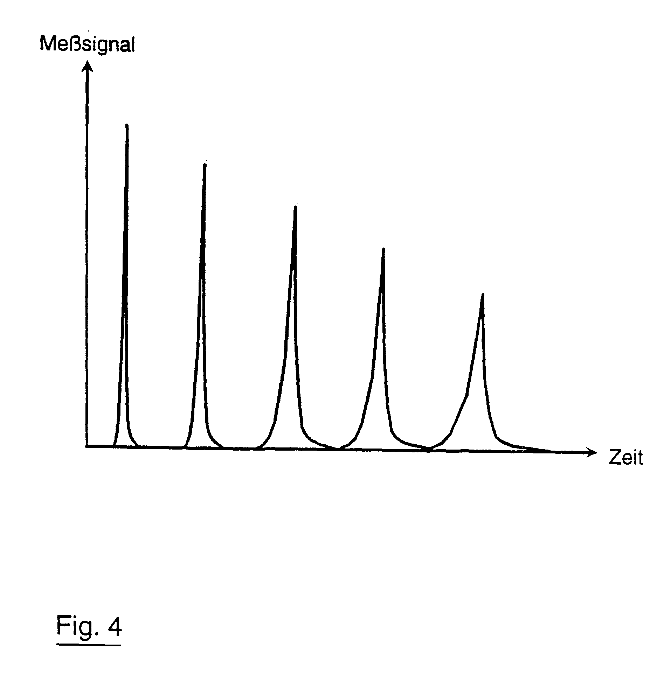

In Fig. 4 ist das Meßsignal über der Zeit aufgetragen. Die Form des jeweiligen Meßsignales verändert sich über die Meßdauer, insbesondere werden die Meßsignale mit zunehmender Zeit niedriger und breiter. Diese Veränderungen der Form des Meßsignals sind durch die unterschiedlich lange Laufstrecke von den einzelnen Gefäßen 1 bis zum Detektor 5 begründet, da aufgrund einer längeren Laufdauer das aufgenommene Analyt innerhalb des Akzeptormediums 7 diffundiert und sich somit die innerhalb der Länge eines Dialyseschlauches 2 angesammelte Konzentration sich über einen längeren Bereich des Akzeptermediums 7 verteilt.

Um absolute Konzentration bestimmen zu können, wird daher vorgeschlagen, daß in zumindest einem der Gefäße 1 eine Standardlösung mit bekannter Konzentration eines Analyten enthalten ist, so daß mindestens ein Meßsignal vom Detektor erzeugt wird, das für eine Kalibrierung der aus der Messung der Konzentrationen der Analyte erzeugten Meßsignale verwendet wird. Werden innerhalb einer Serie von Meßsignalen zwei Meßsignale durch eine Standardlösung erzeugt, läßt sich eine entsprechende Eichkurve erzeugen, wie sie in Fig. 4 gestrichelt dargestellt ist. Dabei wird in bevorzugter Weise das erste und das letzte Meßsignal der dargestellten Meßkurve zur Kalibrierung verwendet.

Weiterhin besteht das Problem, daß sich die Meßsignale von zwei benachbarten Abschnitten des Akzeptormediums überlagern können. Um das zu verhindern, kann zum einen der Abstand zwischen den Probenahmestellen vergrößert werden. Zum anderen wird gerade in Bezug auf eine Miniaturisierung der Vorrichtung zur Serienprobenahme vorgeschlagen, daß ein Gaseinlaßventil (nicht in der Fig. 2 dargestellt) vor dem in Strömungsrichtung ersten Dialyseschlauch 2 angeordnet ist. Mit Hilfe des Gaseinlaßventils wird während der zweiten Zeitdauer, in der die Pumpe 4 aktiviert ist, in regelmäßigen Abständen ein Gas - vorzugsweise Luft -, in das Akzeptormedium 7 eingelassen. Somit bilden sich Gasblasen innerhalb des Akzeptormediums 7, die im wesentlichen den Querschnitt der Dialyseschläuche 2 bzw. der Verbindungsschläuche 3 ausfüllen. Somit sind zwischen jeweils zwei Dialyseschläuchen 2 in den entsprechenden Verbindungsschläuchen 3 Gasblasen enthalten, die eine im wesentliche vollständige Trennung der jeweils sich in einem Dialyseschlauch 2 befindenden Abschnitte des Akzeptormediums 7 bewirken. Beim Transport des Akzeptormediums 7 zum Detektor 5 bleiben die Gasblasen im wesentlichen bestehen, so daß sich die Abschnitte des Akzeptormediums 7 nicht durchmischen und die vom Detektor 5 erzeugten Meßsignale somit nicht überlagert sind. Dadurch wird eine erhöhte Genauigkeit in der Bestimmung der Konzentration des Analyten in der Flüssigkeit 6 ermöglicht.

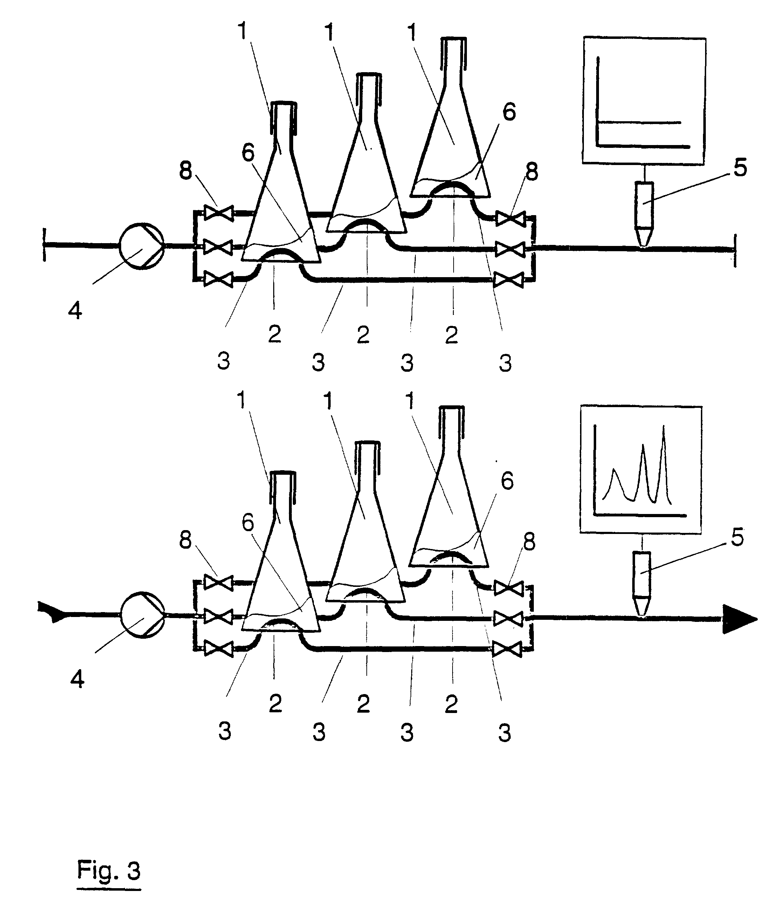

Bei dem in Fig. 3 dargestellten zweiten Ausführungsbeispiel einer erfindungsgemäßen Vorrichtung zur Serienprobenahme sind die Dialyseschläuche 2 parallel zueinander angeordnet.

Über Verbindungsschläuche 3 sind die Dialyseschläuche 2 jeweils mit der Pumpe 4 und dem Detektor 5 verbunden. Bei dem dargestellten zweiten Ausführungsbeispiel sind zwei Mehrwegeventilanordnungen 8 vorgesehen, wobei eine Mehrwegeventilanordnung 8 zwischen der Pumpe 4 und den Dialyseschläuchen 2 und eine weitere Mehrwegeventilanordnung 8 zwischen den Dialyseschläuchen 2 und dem Detektor 5 angeordnet sind. Dabei reicht allgemein auch das Vorsehen von lediglich einer Mehrwegeventilanordnung 8 aus, um die im folgenden beschriebenen Betriebsweise des zweiten Ausführungsbeispieles durchführen zu können.

Während der ersten Zeitdauer ist die Pumpe 4 ausgeschaltet, so daß sich das Akzeptormedium 7 innerhalb der Verbindungsschläuche 3 und der Dialyseschläuche 2 im wesentlichen im Ruhezustand befindet. Dieser Zustand ist in der oberen Hälfte von Fig. 3 dargestellt. In bevorzugter Weise sind in diesem Zustand sämtliche Ventile der Mehrwegeventilanordnungen 8 geschlossen, so daß das Akzeptormedium 7, das sich in einem der Dialyseschläuche 2 befindet, nicht mit dem Akzeptormedium 7 eines anderen Dialyseschlauches 2 in Verbindung steht. Während der zweiten Zeitdauer sind jeweils zwei entsprechende Ventile der Mehrwegeventilanordnungen 8 geöffnet, so daß die Pumpe 4 das Akzeptormedium 7 durch einen der parallel angeordneten Wege, also durch einen der Dialyseschläuche hindurch transportiert und eine Messung der Konzentration des Analyten im Akzeptormedium 7 durch den Detektor 5 ermöglicht. Dieser Zustand ist in der unteren Hälfte von Fig. 3 schematisch dargestellt. Der geöffnete Weg verläuft durch den vorderen der drei dargestellten Gefäße 1.
Mit der parallelen Anordnung der Dialyseschläuche 2 ist somit eine separate Messung der Konzentration eines Analyten in einer der Dialyseschläuche 2 möglich, ohne daß das Akzeptormedium 7 innerhalb eines anderen Dialyseschlauches 2 verändert zu werden braucht. Daher ist mit der parallelen Anordnung von Dialyseschläuchen 2 die Messung der Konzentration eines Analyten in verschiedenen Gefäßen 1 zu unterschiedlichen Zeitpunkten, mit unterschiedlicher Häufigkeit und mit unterschiedlichen Stand- bzw. Diffusionszeiten möglich.

Bei den zuvor erläuterten erfindungsgemäßen Ausführungsbeispielen, die in den Fig. 2 und 3 dargestellt sind, befindet sich jeweils ein Dialyseschlauch 2 in einem separaten Gefäß 1. Somit kann die Konzentration eines oder mehrerer Analyte in den separaten Gefäßen gemessen werden. Bei einer weiteren, nicht dargestellten Ausführungsform sind mehrere Dialyseschläuche 2 innerhalb eines Gefäßes 1 angeordnet, so daß die Konzentration eines oder mehrerer Analyte an verschiedenen Orten innerhalb des gleichen Gefäßes 1 gemessen werden kann. Dabei kann selbstverständlich sowohl eine serielle als auch eine parallele Anordnung von Dialyseschläuchen 2 verwendet werden.

Die zuvor näher erläuterten Vorrichtungen zur Serienprobenahme können nun innerhalb einer Vorrichtung zum Steuern von Substratkonzentrationen in Flüssigkeiten verwendet werden, die neben einer in den Fig. 2 oder 3 dargestellten Vorrichtung einen Computer 9 und eine Nachfülleinheit 10 aufweist, wie in Fig. 1 dargestellt ist. Dabei ist der Computer 9 mit dem Detektor 5 verbunden und zeichnet die vom Detektor 5 erzeugten Meßsignale auf. Die aus einer Auswertung der Meßsignale erzeugten Werte werden mit zuvor abgespeicherten Sollwerten verglichen. Wird dabei festgestellt, daß die Ist-Konzentration von der Soll-Konzentration abweicht, so steuert der Computer 9 die Nachfülleinheit 10 an, so daß das entsprechende Gefäß 1 mit der abweichenden Konzentration des Analyten mit dem vorgegebenen Substrat nachgefüllt wird. Dazu weist die Nachfülleinheit 10 ein Reservoir 11, eine Pumpe 12 sowie eine Verteileranordnung 13 auf. Somit läßt sich auch bei einer Mehrzahl von Gefäßen 1 über die Bestimmung der Substratkonzentration in den Flüssigkeiten 6, die in den Gefäßen 1 angeordnet sind, eine online-Steuerung verwirklichen.

Im folgenden werden ein Beispiel einer Messungsanordnung sowie eine durchgeführte Messung beschrieben und erläutert. Zur Messung der Glucosekonzentration in parallelen Reaktionsgefäßen mit 50 ml Reaktionsmedium wurden in die Reaktionsgefäße zur Probenahme hydrophile Polysulfon-Hohlfasern mit einem Innendurchmesser von 0,5 mm, einer Wandstärke von 0,08 mm, einer Länge von 100 mm und einer Ausschlußgrenze von 5 kD eingetaucht und mit Teflonschläuchen mit einem Innendurchmesser von 0,6 mm und einer Länge von 2000 mm miteinander verbunden. Das Reaktionsmedium enthielt 1 g/l Glucose und als Akzeptormedium wurde Wasser verwendet. Zur Detektion von Glucose wurde ebenfalls über einen Teflonschlauch das letzte der hintereinander geschalteten Reaktionsgefäße mit einem Brechungsindex-Detektor verbunden. Nach einer Wartezeit von 11 Minuten wurde der Akzeptor mit den über die Dialysemembranen diffusiv aufgenommenen Glucoseproben mit einer Pumpgeschwindigkeit von 0.7 ml/min zum Detektor transportiert und die Probenpeaks gemessen. Die Probenpeaks sind in Fig. 4 dargestellt. Die Glucosepeaks bei größeren Meßzeiten sind aufgrund der längeren Wegstrecke bis zum Detektor und damit der stärkeren axialen Rückvermischung niedriger und breiter. Während der mehrtägigen Probenahme wurde keine meßbare Abnahme der Reaktionsvolumina gemessen. Die Probenpeaks waren während der Dauermessungen (7 Serienmessungen in 2 Stunden) exakt reproduzierbar.

## Patentansprüche

1. Verfahren zur Serienprobenahme, insbesondere zur Bestimmung der Substrat- und Produktionskonzentrationen in Flüssigkeiten,
- mit mindestens zwei, innerhalb von mindestens zwei Gefäßen angeordneten Dialyseschläuchen und
- mit für eine Verbindung der Dialyseschläuche mit einer Pumpe und einem Detektor vorgesehenen Verbindungsschläuchen,
- wobei die Dialyseschläuche und die Verbindungsschläuche mit einem Akzeptormedium angefüllt sind,
- bei dem während einer ersten Zeitdauer die Pumpe ausgeschaltet ist und das mindestens eine Analyt, das in den in den mindestens zwei Gefäßen enthaltenen Flüssigkeiten enthalten ist, vom in den mindestens zwei Dialyseschläuchen enthaltenen Akzeptormedium diffusiv aufgenommen wird und
- bei dem während einer zweiten Zeitdauer das in mindestens einem der Dialyseschläuche und in den zugeordneten Verbindungsschläuchen enthaltene Akzeptormedium mit Hilfe der Pumpe zum Detektor für eine Analyse der Konzentration des mindestens eines Analyten transportiert wird,
**dadurch gekennzeichnet,**
**daß** in mindestens einem Gefäß eine Standardlösung und in mindestens einem weiteren Gefäß eine zu analysierende Flüssigkeit angeordnet ist
und **daß** mit Hilfe des Meßsignals, das für das aus dem Gefäß mit der Standardlösung entnommene Analyt vom Detektor erzeugt wird, das mindestens ein weiteres Meßsignal kalibriert wird, daß für ein aus einer zu analysierenden Flüssigkeit entnommenes Analyt vom Detektor erzeugt wird.

2. Verfahren nach Anspruch 1,
- bei dem die Dialyseschläuche seriell mit den Verbindungsschläuchen untereinander verbunden sind,
- bei dem während der zweiten Zeitdauer das innerhalb der Dialyseschläuche und der Verbindungsschläuche enthaltene Akzeptormedium im wesentlichen vollständig von der Pumpe zum Detektor transportiert wird und
- bei dem die Konzentration des Analyten abschnittsweise innerhalb des Akzeptormediums nacheinander vom Detektor gemessen wird.

3. Verfahren nach Anspruch 2, bei dem während der zweiten Zeitdauer mit Hilfe eines in Strömungsrichtung vor dem ersten Dialyseschlauch angeordneten Gaseinlaßventils abschnittsweise Gas in das Akzeptormedium eingelassen wird.

4. Verfahren nach Anspruch 1,
- bei dem die Dialyseschläuche parallel angeordnet und mit mindestens einer Mehrwegeventilanordnung verbunden sind und
- bei dem während der zweiten Zeitdauer durch ein Öffnen jeweils eines vorgegebenen Weges der Mehrwegeventilanordnung das innerhalb eines der Dialyseschläuche enthaltene Akzeptormedium unabhängig von dem innerhalb eines anderen Dialyseschlauch enthaltene Akzeptormedium von der Pumpe zum Detektor transportiert wird.

5. Verfahren nach einem der Ansprüche 1 bis 4, bei dem durch Anordnung der Dialyseschläuche in separaten Gefäßen die Konzentrationen des Analyten in den separaten Gefäßen gemessen werden.

6. Verfahren nach einem der Ansprüche 1 bis 4, bei dem durch Anordnung der Dialyseschläuche innerhalb eines Gefäßes die Konzentrationen des Analyten an verschiedenen Orten innerhalb des Gefäßes gemessen werden.

7. Verfahren nach einem der Ansprüche 1 bis 6, bei dem ein Akzeptormedium verwendet wird, das bis auf den mindestens einen Analyten alle niedermolekularen Komponenten der zu analysierenden Flüssigkeit in ähnlichen Konzentrationen enthält.

8. Verfahren nach einem der Ansprüche 1 bis 7, bei dem die Konzentrationen von mindestens zwei verschiedenen Analyten von mindestens zwei verschiedenen Detektoren gemessen wird.

9. Vorrichtung zur Serienprobenahme, insbesondere zur Bestimmung der Substrat- und Produktkonzentration in Flüssigkeiten,
- mit mindestens zwei Gefäßen (1),
- mit mindestens zwei Dialyseschläuchen (2),
- mit Verbindungsschläuchen (3),
- mit einer Pumpe (4) und
- mit einem Detektor (5),
- wobei die Dialyseschläuche (2) innerhalb der mindestens zwei Gefäße (1) angeordnet sind und
- wobei die Dialyseschläuche (2) über die Verbindungschläuche (3) mit der Pumpe (4) und dem Detektor (5) verbunden sind,
**dadurch gekennzeichnet,**
**daß** mindestens in einem Gefäß (1) eine Standardlösung zur Kalibrierung der vom Detektor (5) erzeugten Meßsignale vorhanden ist und
**daß** in mindestens einem weiteren Gefäß (1) eine zu analysierende Flüssigkeit vorhanden ist.

10. Vorrichtung nach Anspruch 9, **dadurch gekennzeichnet, daß** die Dialyseschläuche (2) seriell über die Verbindungsschläuche (3) untereinander verbunden sind.

11. Vorrichtung nach Anspruch 10, **dadurch gekennzeichnet, daß** ein Gaseinlaßventil vor dem in Strömungsrichtung ersten Dialyseschlauch (2) vorgesehen ist.

12. Vorrichtung nach Anspruch 9, **dadurch gekennzeichnet, daß** die Dialyseschläuche (2) parallel über die Verbindungsschläuche (3) miteinander verbunden sind und daß mindestens eine Mehrwegeventilanordnung (8) vorgesehen ist.

13. Vorrichtung nach einem der Ansprüche 9 bis 12, **dadurch gekennzeichnet, daß** die Dialyseschläuche (2) in jeweils einem separaten Gefäß (1) angeordnet sind.

14. Vorrichtung nach einem der Ansprüche 9 bis 12, **dadurch gekennzeichnet, daß** mehrere Dialyseschläuche (2) innerhalb eines Gefäßes (1) angeordnet sind.

15. Vorrichtung nach einem der Ansprüche 9 bis 14, **dadurch gekennzeichnet, daß** als Dialyseschlauch (2) ein Bündel von Dialysekapillaren vorgesehen ist.

16. Vorrichtung nach einem der Ansprüche 9 bis 15, **dadurch gekennzeichnet, daß** eine Mehrzahl von Detektoren (5) zum Nachweis unterschiedlicher Analyte vorgesehen ist.

17. Vorrichtung zum Steuern von Substratkonzentrationen in Flüssigkeiten
- mit einer Vorrichtung nach einem der Ansprüche 9 bis 16,
- mit einem Computer (9), der mit dem Detektor (5) verbunden ist und die vom Detektor (5) erzeugten Meßsignale aufnimmt und auswertet, und
- mit einer Nachfülleinheit (10), die mit dem Computer (9) verbunden ist und für ein Nachfüllen eines vorgegebenen Substrates aus einem Reservoir (11) in die Gefäße (1) vorgesehen ist,
- wobei der Computer (9) in Abhängigkeit von der Abweichung einer Konzentration eines Analyten innerhalb eines speziellen Gefäßes (1) von einer vorgegebenen Konzentration die Nachfülleinheit (10) für ein Nachfüllen des Gefäßes (1) ansteuert.

## Claims

1. A method of taking series of samples, in particular for determining the substrate and product concentrations in fluids,
- with at least two dialysis tubes arranged within at least two vessels, and
- with connector tubes provided for connecting the dialysis tubes to a pump and to a detector,
- the dialysis tubes and the connector tubes being filled with an acceptor medium.
- in which the pump is switched of during a first time period and the at least one analyte, which is contained in the fluids contained in the at least two vessels, is diffusely taken up by the acceptor medium contained in the at least two dialysis tubes, and
- in which, during a second time period, the acceptor medium contained in at least one of the dialysis tubes and in the associated connector tubes is transported with the aid of the pump to the detector for analysis of the concentration of the at least one analyte,
**characterised in that**
a standard solution is contained in at least one vessel
and a fluid to be analysed is contained in at least one other vessel, and that the at least one other measuring signal is calibrated with the aid of the measuring signal generated by the detector for the analyte with drawn from the vessel with the standard solution, which is generated by the detector for an analyte withdrawn from a fluid to be analysed.

2. A method according to Claim 1,
- in which the dialysis tubes are interconnected in series with the connector tubes,
- in which, during the second time period, the acceptor medium contained in the dialysis tubes and the connector tubes is substantially completely transported from the pump to the detector, and
- in which the concentration of the analyte is measured by the detector in portions one after the other.

3. A method according to Claim 2, in which during the second time period gas is allowed into the acceptor medium in portions with the aid of a gas-inlet valve arranged in front of the first dialysis tube in the direction of flow.

4. A method according to Claim 1,
- in which the dialysis tubes are arranged in parallel and are connected to at least one multiport valve arrangement and
- in which during the second time period, by opening one previously specified port of the multiport valve arrangement in each case, the acceptor medium contained within one of the dialysis tubes is transported from the pump to the detector independently of the acceptor medium contained within another dialysis tube.

5. A method according to one of Claims 1 to 4, in which the concentrations of the analyte in the separate vessels is measured by arranging the dialysis tubes in separate vessels.

6. A method according to one of Claims 1 to 4, in which the concentrations of the analyte at various places within a vessel are measured by arranging the dialysis tubes within the vessel.

7. A method according to one of Claims 1 to 6, in which an acceptor medium is used which, with the exception of the at least one analyte, contains all low-molecular constituents of the fluid to be analysed, and in similar concentrations.

8. A method according to one of Claims 1 to 7, in which the concentrations of at least two different analytes are measured by at least two different detectors.

9. A method of taking series of samples, in particular for determining the substrate and product concentrations in fluids,
- with at least two vessels (1),
- with at least two dialysis tubes (2),
- with connector tubes (3),
- with a pump (4) and
- with a detector (5),
- the dialysis tubes (2) being arranged within the at least two vessels (1) and
- the dialysis tubes (2) being connected to the pump (4) and the detector (5) via the connector tubes (3),
**characterised in that**
a standard solution for calibrating the measuring signals produced by the detector is present in at least one vessel (1), and
a fluid to be analysed is present in at least one other vessel (1).

10. A device according to Claim 9, **characterised in that** the dialysis tubes (2) are interconnected in series via the connector tubes (3).

11. A device according to Claim 10, **characterised in that** a gas-inlet valve is provided in front of the first dialysis tube (2) in the direction of flow.

12. A device according to Claim 9, **characterised in that** the dialysis tubes (2) are interconnected in parallel via the connector tubes (3) and that at least one multiport-valve arrangement (8) is provided.

13. A device according to one of Claims 9 to 12, **characterised in that** the dialysis tubes (2) are arranged in a separate vessel (1) in each case.

14. A device according to one of Claims 9 to 12, **characterised in that** a plurality of dialysis tubes (2) are arranged within a vessel (1).

15. A device according to one of Claims 9 to 14, **characterised in that** a bundle of dialysis capillaries is provided as a dialysis tube (2).

16. A device according to one of Claims 9 to 15, **characterised in that** a plurality of detectors (5) is provided for detecting different analytes.

17. A device for controlling substrate concentrations in fluids
- with a device according to one of Claims 9 to 16,
- with a computer (9) which is connected to the detector (5) and records and evaluates the measuring signals generated by the detector (5), and
- with a refill unit (10), which is connected to the computer (9) and is provided for refilling a particular substrate into the vessels (1) from a reservoir (1),
- in which the computer (9) controls the refill unit (10) for refilling the vessel (1) according to the deviation of a concentration of an analyte within a specific vessel (1) from a previously specified concentration.

## Revendications

1. Procédé pour prélever en série des échantillons, en particulier pour la détermination des concentrations en substrat et de production dans des liquides,
- avec au moins deux tuyaux de dialyse disposés à l'intérieur d'au moins deux récipients, et
- avec des tuyaux de liaison prévus pour établir une liaison des tuyaux de dialyse avec une pompe et un détecteur,
- les tuyaux de dialyse et les tuyaux de liaison étant remplis d'un milieu accepteur,
- dans lequel, pendant une première période de temps, la pompe est mise hors service et le au moins un analyte, contenu dans les liquides, contenu dans les au moins deux récipients, est capté par voie diffusive par le milieu accepteur contenu dans les au moins deux tuyaux de dialyse, et
- dans lequel, pendant une deuxième période de temps, le milieu accepteur, contenu dans au moins l'un des tuyaux de dialyse et dans les tuyaux de liaison associés, est transporté à l'aide de la pompe, vers le détecteur, pour procéder à une analyse de la concentration du au moins un analyte,
**caractérisé en ce que**,
en au moins un récipient est disposée une solution standard et en au moins un autre récipient est disposé un liquide à analyser et **en ce que**, à l'aide du signal de mesure généré par le détecteur pour l'analyte prélevé du récipient contenant la solution standard, on procède à l'étalonnage du au moins un autre signal de mesure, généré par le détecteur pour un analyte prélevé d'un liquide à analyser.

2. Procédé selon revendication 1,
- dans lequel les tuyaux de dialyse sont reliés en séries les uns les autres avec les tuyaux de liaison,
- pour lequel, pendant la deuxième période de temps, le milieux accepteur, contenu à l'intérieur des tuyaux de dialyse et des tuyaux de liaison, est transporté pratiquement complètement de la pompe vers le détecteur, et
- pour lequel la concentration de l'analyte est mesurée par le détecteur, en procédant par fragments, les uns après les autres à l'intérieur du milieu accepteur.

3. Procédé selon la revendication 2, pour lequel pendant la deuxième période de temps, à l'aide d'une soupape d'entrée de gaz, disposée en amont du premier tuyau de dialyse en observant dans la direction d'écoulement, du gaz est inséré par fragments dans le milieu accepteur.

4. Procédé selon la revendication 1,
- pour lequel les tuyaux de dialyse sont disposés parallèlement et sont reliés à au moins un dispositif à soupape multi-voies, et
- pour lequel, pendant la deuxième période de temps, par une ouverture chaque fois d'une voie prédéterminée du dispositif à soupape multi-voies, le milieu accepteur contenu à l'intérieur d'un des tuyaux de dialyse est transporté de la pompe au détecteur, indépendamment du milieu accepteur contenu à l'intérieur d'un autre tuyau de dialyse.

5. Procédé selon l'une des revendications 1 à 4, dans lequel, grâce à l'agencement des tuyaux de dialyse, dans des récipients séparés, on mesure les concentrations de l'analyte dans les récipients séparés.

6. Procédé selon l'une des revendications 1 à 4, pour lequel, grâce à l'agencement des tuyaux de dialyse à l'intérieur d'un récipient, les concentrations de l'analyte sont mesurées en différents sites à l'intérieur du récipient.

7. Procédé selon l'une des revendications 1 à 6, dans lequel on utilise un milieu accepteur qui, jusqu'au au moins un analyte, contient en des concentrations analogues tous les composants à faible poids moléculaire du liquide à analyser.

8. Procédé selon l'une des revendications 1 à 7, dans lequel les concentrations d'au moins deux analytes différents sont mesurées par au moins deux détecteurs différents.

9. Dispositif prélever en série des échantillons, en particulier pour la détermination de la concentration en substrat et de production dans des liquides,
- avec au moins deux récipients (1),
- avec au moins deux tuyaux à dialyse (2),
- avec des tuyaux de liaison (3),
- avec une pompe (4), et
- avec un détecteur (5),
- les tuyaux de dialyse (2) étant disposés à l'intérieur des au moins deux récipients (1), et
- les tuyaux de dialyse (2) étant reliés, par l'intermédiaire des tuyaux de liaison (3), à la pompe (4) et au détecteur (5),
**caractérisé en ce que**,
au moins dans un récipient (1) est placée une solution standard pour l'étalonnage du signal de mesure généré par le détecteur (5), et
**en ce qu'**au moins en un autre récipient (1) est placé un liquide à analyser.

10. Dispositif selon la revendication 9, **caractérisé en ce que** les tuyaux de dialyse sont reliés entre eux en série, par l'intermédiaire des tuyaux de liaison (3).

11. Dispositif selon la revendication 10, **caractérisé en ce qu'**une soupape d'introduction de gaz est prévue en amont du premier tuyau de dialyse (2), en observant dans la direction de l'écoulement.

12. Dispositif selon la revendication 9, **caractérisé en ce que** les tuyaux de dialyse (2) sont reliés ensemble en parallèle, par l'intermédiaire des tuyaux de liaison (3), et **en ce qu'**au moins un dispositif à soupape multi-voies (8) est prévu.

13. Dispositif selon l'une des revendications 9 à 12, **caractérisé en ce que** les tuyaux de dialyse (2) sont disposés chacun dans un récipient (1) séparé.

14. Dispositif selon l'une des revendications 9 à 12, **caractérisé en ce que** plusieurs tuyaux de dialyse (2) sont disposés à l'intérieur d'un récipient (1).

15. Dispositif selon l'une des revendications 9 à 14, **caractérisé en ce qu'**un faisceau de capillaires de dialyse est prévu comme tuyau de dialyse (2),

16. Dispositif selon l'une des revendications 9 à 15, **caractérisé en ce qu'**un pluralité de détecteurs (5) est prévue pour la détection d'analytes différents.

17. Dispositif de commande des concentrations en substrat dans des liquides
- avec un dispositif selon l'une des revendications 9 à 16,
- avec un ordinateur (9), relié au détecteur (5) et enregistrant et évaluant les signaux de mesure générés par le détecteur (5),
- avec une unité de rechargement (10), reliée à l'ordinateur (5) et prévue pour effectuer un rechargemant d'un substrat prédéterminé, depuis un réservoir (11), dans les récipients (1),
- l'ordinateur (9) commandant l'unité de rechargement (10) devant assurer le rechargement du récipient (1), en fonction de l'écart d'une concentration d'analyte à l'intérieur d'un récipient (1) spécial vis-à-vis d'une concentration prédéterminée.
